Europäisches Patentamt

European Patent Office

Office européen des brevets

(11) Publication number: **0 161 069**
**A1**

(12) **EUROPEAN PATENT APPLICATION**

(21) Application number: 85302422.2

(22) Date of filing: 04.04.85

(51) Int. Cl.⁴: **F 16 C 3/03**
**F 16 D 3/06, B 62 D 1/18**

(30) Priority: 04.04.84 GB 8408673

(43) Date of publication of application:
13.11.85 Bulletin 85/46

(84) Designated Contracting States:
AT DE FR GB IT NL SE

(71) Applicant: Piper Products Limited
Herald Way Binley Trading Estate
Coventry CV32 2NY, W. Midlands(GB)

(72) Inventor: Vicary, Barry Vincent c/o Piper Products
Limited
Herald Way Binley Trading Estate
Coventry CV3 2NY W. Midlands(GB)

(74) Representative: Adkins, Michael
Withers & Rogers 4 Dyer's Buildings
Holborn London, EC1N 2JT(GB)

(54) A device for transmitting torque.

(57) A device for transmitting torque comprises a driving member (10) and a driven member (16) which are movable relatively in an axial sense. The driven member (16) is tubular and includes first and second tubular sections (15, 21). The first section (15) is splined and receives a splined portion (13) of the driving member (10) in one axial position to enable torque to be transmitted. The second section (21) receives the splined portion (13) of the driving member in a different axial position to maintain a desired relative rotational orientation between the driving member (10) and said first section (15). The second section includes a tubular splined element (26) e.g. of plastics material, rotationally fast with the first section (15) and which is housed within a metal tubular support member (25) secured to said first section.

FIG.1

Croydon Printing Company Ltd.

## A DEVICE FOR TRANSMITTING TORQUE

The invention relates to a device for transmitting torque and is particularly but not exclusively concerned with a device for transmitting torque in a steering system of a vehicle having a tipping cab.

Torque transmitting devices in steering systems of vehicles are described in US No . 4384861, DE Nos. 2051777 and 2002471 and in DD No. 137564. Where a cab is to be tipped it is *usually* necessary to allow the steering column to extend and this is normally effected by utilising a telescopic device having first and second sections which are movable axially relative to each other and through which torque can be transmitted for steering. In order to provide adequate extension of the device it either has to be long initially involving welded together components, weld failure in which can lead to loss of steering, or shorter but made up of e.g. three axially movable components which is undesirably complex. US No. 4384861 shows an example of the latter type and DE No. 2051777 shows an example of the former.

An object of the present invention is to provide an improved device for transmitting torque particularly but not exclusively for use in a steering system of a vehicle having a tipping cab.

According to one aspect of the invention there is provided a device for transmitting torque comprising a driving member and a driven member which are movable relatively in an axial sense, one of said members being tubular and including first and second sections the first of which receives a portion of the other member in one axial position to enable torque to be transmitted and the second of which receives said portion of the other member in a different axial position to maintain a desired relative rotational orientation between the other member and said first section, said second section including an element rotationally fast with the first section and housed within a support member on said first section.

Where the device is used in the steering system of a vehicle having a tipping cab the said portion of other member will normally be arranged within said first section during transmission of steering torque but will move clear of the first section and engage the second section when the cab occupies its tipped position.

The said element may be made of a light-weight material, e.g. nylon. Also, the support member may be relatively light-weight compared to the first section. Therefore the device of the invention is both simple in construction and of comparatively light weight which is desirable both from a manufacturing and cost point of view.

Preferably the element is tubular and coaxial with said first section.

The support member may be tubular and mounted at one end of the first section, retainer means preferably being provided on the support member to retain the element axially therein. In such a case the retainer means may be a bent-over lip at the opposite end of the support member.

Preferably a bearing is positioned between the retainer means and an adjacent end of the element and which engages the said other member of the driving and driven members. The bearing may facilitate movement of the other member transverse to the axial direction of relative sliding movement of the members.

The said element and the first section may be formed with co-operable interlock means whereby the first section and element are rotationally fast with each other. The interlock means may comprise a recess in one of the first section and element and a projection on the other of the first section and element. The projection and recess may be tapered in such a way that movement of the projection into the recess will cause taper surfaces of the projection to wedge against surfaces of the recess.

Preferably the first section and the element are formed with aligned axial splines which are slidably engageable with a spline on said other member. Such an arrangement permits the spline on the other member to be moved axially out of mating engagement with a spline on the first section and into mating engagement with a spline on the element whereby on reverse axial movement of the other member the spline on the element will ensure that the spline on the other member aligns with the complementary spline on the first section. The invention is, therefore, particularly useful in an application where it is necessary for the driving and driven members to be moved axially relative to each other for a substantial distance as in the case of a steering system of a vehicle having a tipping cab.

According to another aspect of the invention there is provided a steering system in a vehicle including a device for transmitting torque according to any of the eight immediately preceding paragraphs

According to a further aspect of the invention there is provided a device for transmitting torque comprising a driving member and a driven member which are movable relatively in an axial sense, one of said members including first and second sections, the first of which receives a portion of the other member in one axial position to enable torque to be transmitted and the second of which receives said portion of the other member in a different axial position to maintain a desired relative rotational orientation between the other member and said first section, said driven member being formed integrally with a member through which torque is transmitted to a rotary component.

The arrangement in the preceeding paragraph is particularly desirable because it avoids the use of a weld to join together the driven member and the member through which torque is transmitted to the rotary component. A typical welded connection 30 is shown in US No. 4384861 between a housing 1 and a bottom 5, the latter being secured to a universal joint 3. Should the weld 30 fail, steering will be lost.- However according to said further aspect of the invention no such weld is necessary making the device more reliable.

According to yet another aspect of the invention there is provided a method of forming a spline in a member of a device for transmitting torque comprising passing a spline-forming tool along a pre-formed spline in a first section of the member and subsequently moving the tool through an unsplined second section of the member thereby forming a spline therein in alignment with said pre-formed spline.

The device is preferably a device for transmitting torque in accordance with the said one aspect, other aspect or further aspect of the invention. In such a case the device is assembled by securing the first section to the second section prior to moving the tool through the second section, and then locating the other member within the first and second sections. Where the said element is provided the assembly steps may include locating the element against the first section, positioning the support member over the element and securing the support member to said first section, moving the tool through the element to form the spline therein, locating the other member within the first and second sections and using retainer means to retain the element within the support member.

The support member may be retained on the first section by deforming a section of the support member into a recess in the first section.

The element preferably frictionally engages an inner surface of the support member.

Devices for transmitting torque in accordance with the invention will now be described by way of example with reference to the accompanying drawings in which:-

Fig.1 is an elevation of one form of device in accordance with the invention shown partly in longitudinal cross-section;

Fig.2 is a cross-section of the device of Fig. 1 on the line II-II in Fig.1;

Fig.3 is a cross-section of the device of Fig.1 on the line III-III in Fig.1;

Fig.4 is an end view of the device of Fig.1 looking in the direction of arrow C in Fig.1;

Fig.5 is an elevation of part of a plastics tube (element) of the device of Fig.1 together with

an adjacent end part of the aforesaid first section;

Fig.6 is a plan view of the plastics tube of Fig.5;

Fig.7 is a view similar to Fig.1 showing a shorter version of a device in accordance with the invention;

Fig.8 is a plan view of a first section of the device of Fig.7;

Fig.9 is another form of device in accordance with the invention shown partly in longitudinal cross-section; and

Fig.10 is a diagrammatic view showing a method of forming splines.

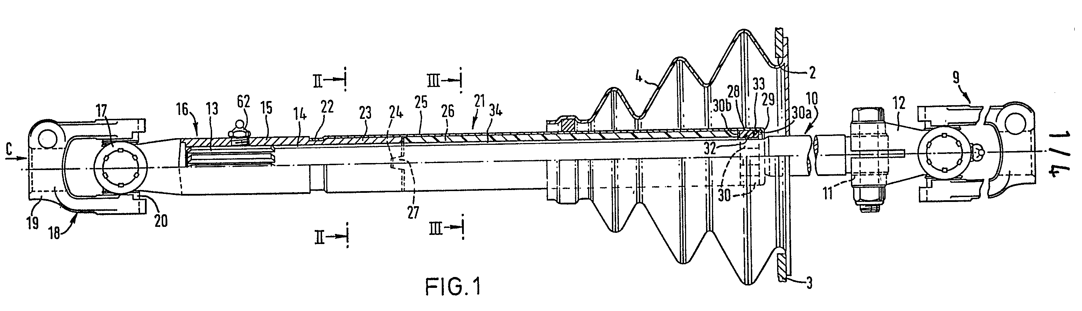

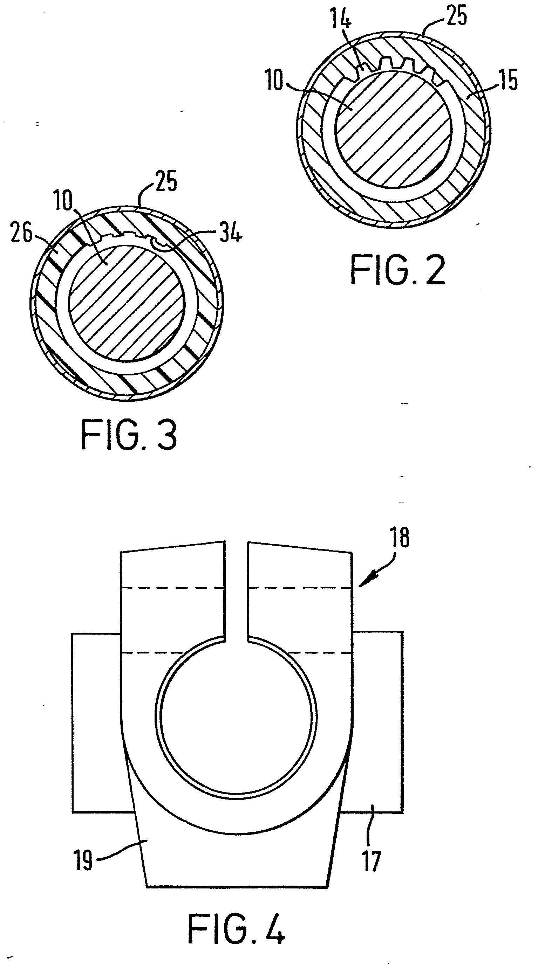

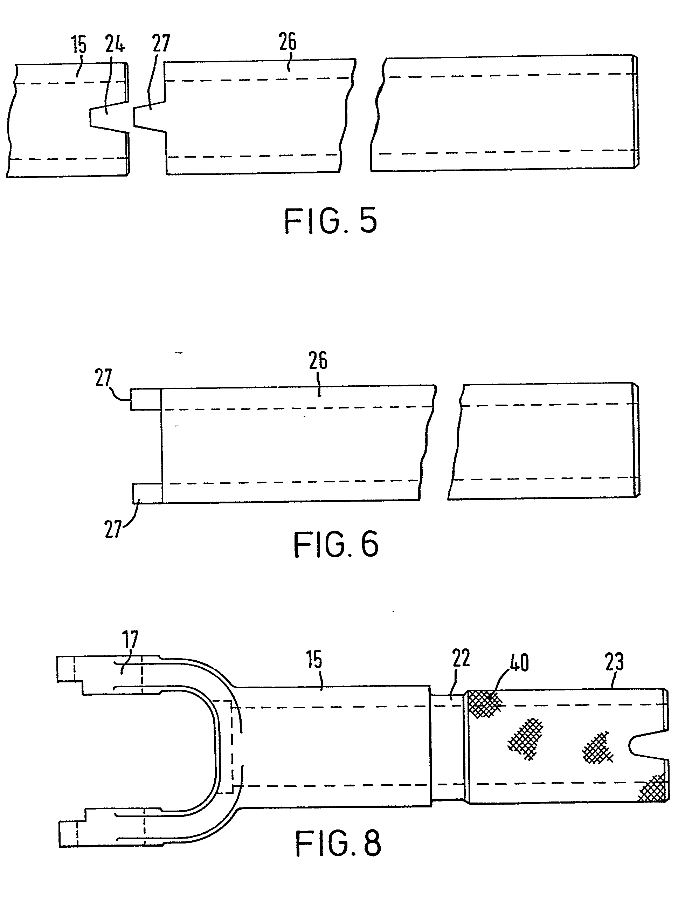

Referring to Figs. 1 to 6, a driving member comprises a shaft 10 having its right hand end as viewed in Fig.1 formed with splines 11 on which is mounted a fork 12 of a universal joint 9. Alternatively the shaft 10 and fork 12 could be a one-piece forging. The left hand end of the shaft 10 is formed with external splines 13 which mate slidably with complementary internal splines 14 formed on a tubular section 15 of a driven member 16. The tubular section 15 constitutes the aforesaid first section. The driven member 16 is formed as a forging and has a fork 17 integral with its left hand end. The fork forms part of a universal joint 18. The limbs of fork 17 are connected to a further fork 19 through a spider 20.

The tube 15 has a peripheral groove 22 and a reduced external diameter portion 23 which has its right hand end formed with two diametrically opposed V-shaped recesses 24. A metal tube 25(constituting the aforesaid support member) of a second section 21 spigotally locates on the portion 23 and has its left hand end rolled into the groove 22 to prevent axial movement of the tube. The exterior of tube 15 may also be knurled (in the same way as tube in Fig. 8) so as to grip the tube 25. The tube 25 houses a metal or plastics tube 26 (preferably nylon and constituting the aforesaid element) which has two diametrically opposed V-shaped projections 27 located in the recesses 24. The projections 27 are slightly oversize in relation to the recesses so that a taper-wedge-fit is achieved between the taper edges therein to prevent rotation of the tube 26 relative to the tube 15. The right hand end of the tube 25 is turned inwards to form a flange 29 which retains the nylon tube 26 in place, a bearing 28 being located between the tube 26 and the flange 29. A metal washer 30a is placed between the flange and the bearing *to prevent damage to the bearing when bending the flange.* The bearing comprises two substantially semi-circular plastics shells 30 which carry inner and outer 0-rings 32, 33. The inner 0-ring 32 sealingly engages the exterior of shaft 10 and the other 0-ring 33 sealingly engages

*The inner diameter of the bearing is greater than the outer diameter of* the interior of tube 25. ⟨ *the shaft 10 to* facilitate slight transverse movement of the shaft 10 relative to tube 26 to compensate for small amounts of *A resilient washer 30b which wipes the shaft 10 is placed between the tube 26 and bearing 28* eccentricity between the shaft 10 and tube 26. ⟨ The internal surface of nylon tube 26 is formed with splines 34 identical to the splines 14 and axially aligned therewith. The axial alignment permits the shaft 10 to be moved axially to the right relative to driven member 16 so that the splines 13 moves out of engagement with splines 14 and into engagement with the splines 34. The rightward movement of the shaft 10 is limited by the bearing 28 which engages the right-hand end of the splines 13 and acts as a stop.

The device shown is particularly useful as part of a steering column of a tipping cab commercial vehicle. When the cab is in its normal position, the splines 13 of shaft 10 are positioned within the tube 15 as in Fig. 1 so that steering torque will be transmitted from shaft 10 to tube 15 via splines 13, 14. When the cab is tipped, the splines 13 move into the nylon tube 26. If the steering wheel is inadvertantly turned when the cab is tipped, the rotational interlock between tubes 15, 26 by virtue of recesses 24 and projections 27 prevents misalignment of the splines 14, 34. Therefore when the cab is moved back into the normal position the splines 13 will move back into tube 15.

The method of assembling the device and the forming of splines 34 is as follows.

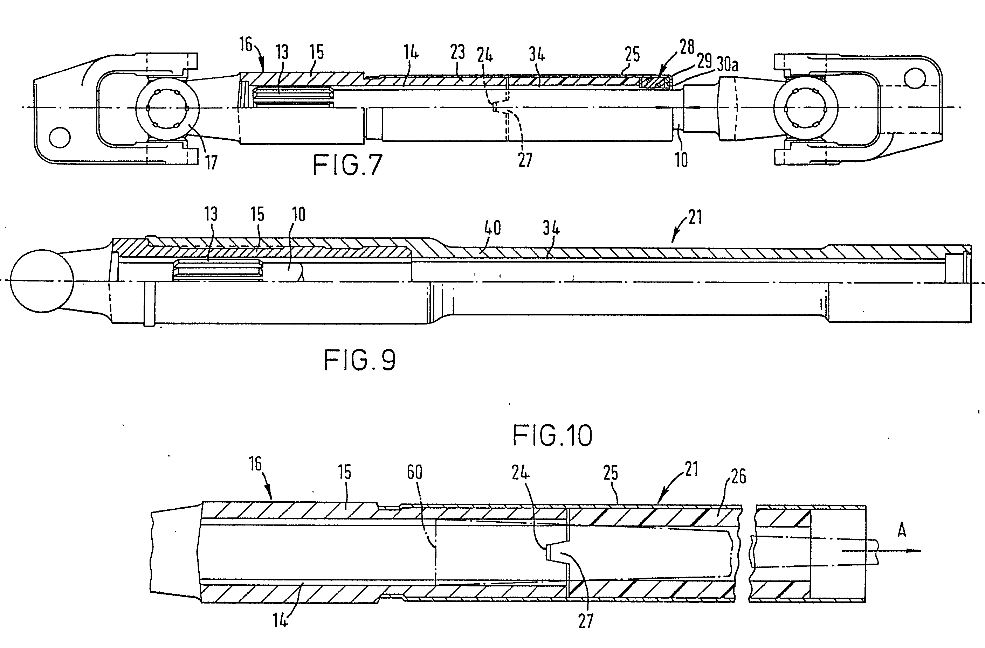

The nylon tube 26 is first placed against the end of pre-splined tube 15 with the projections 27 in recesses 24. The metal tube 25 is then pushed over the nylon tube 26 (the latter being a friction fit within the tube 25) and rolled to locate in the groove 22. A broaching tool 60 *similar to* /the kind used to form splines 14 is drawn through the inside of tube 15 in direction A in Fig.10, an opening 31 to which is between the limbs 17 of fork 18. The broaching tool 60 passes along the pre-formed splines 14 and then proceeds to cut the spline 34 in the nylon tube 26. Once the splines 34 are fully formed, the shaft 10 is placed in position with the shells 30 and 0-rings 32, 33 of bearing 28 assembled on the shaft with washer 30a. The bearing 28 is then positioned inside the tube 25 and the flange 29 is formed.

As shown in Fig.1 the second section 21 projects through an aperture 2 in a floor panel 3 of a cab and a bellows seal 4/ *may be* provided to prevent draughts passing through aperture 2.

Reference is now made to Figs. 7 and 8 in which parts equivalent to parts in Figs. 1 to 6 carry like reference numerals. The device is very similar to that of Figs. 1 to 6 using a *similar* driven member 16. However the metal tube 25 is very much shorter to provide only a small amount of telescoping of the device which is adequate in certain applications. As in Figs. 1 to 6 the tube 15 and tube 26 interlock by means of the tapered recesses and projections 24, 27. Fig. 8 shows the way in which the outer surface of the reduced diameter portion 23 is formed with knurling 40 over its outer surface to improve the grip between tubes 15 and 25.

In Fig.9 the second section 21 comprises an aluminium tube 40 which is cast, moulded or otherwise held on to the exterior of tube 15. After the tube 40 (constituting the aforesaid second section) is in position, splines 34 can be formed subsequently by drawing a broach through the tube 40 as in the embodiment of Figs. 1 to 6. A splined driving member can then be located in tubes 15, 40 as above.

Forming the splines by drawing a broaching tool through the pre-formed splines ensures that the splines in the tubes 25, 40 are in perfect alignment with those in respective tubes 15.

A grease nipple 62 may be provided on the tube 15 as shown in Fig.1 to enable grease to be applied to the splines 14.

The device of the invention can be made light in weight by using light tubes 25, 40 which do not transmit steering torque. That would not be the case if the tubes 25, 40 were replaced by longer versions of tubes 15 of the driven members. Not only would the latter be very heavy they would be difficult and expensive to produce as each tube 15 formed integrally with its fork by forging would then need to be drilled to form an axial bore prior to forming the splines. The drilling operations on such a long workpiece would be time consuming and costly as a great deal of scrap metal drillings would be formed. The present invention overcomes that problem and is highly advantageous in that respect.

Moreover the use of a forging to form the tube 16 integral with the fork 17 is highly advantageous because steering torque is not transmitted to the universal joint 18 through a weld such as weld 30 in US No. 4384861. Of course the tube 16 need not necessarily be integral with a fork but may be integral with a stud such as stud 6 in US No. 4384861.

By using a material such as nylon or aluminium in the second section the splines can be formed easily therein using the pre-splined first section 16 as a guide. Such a method simplifies production of the device.

0161069

CLAIMS:

1.     A device for transmitting torque comprising a driving member (10) and a driven member (16) which are movable relatively in an axial sense, one of said members (16) being tubular and including first and second sections (15, 21) the first (15) of which receives a portion (13) of the other member (10) in one axial position to enable torque to be transmitted and the second (21) of which receives said portion (13) of the other member in a different axial position characterised in that said second section includes an element (26) rotationally fast with the first section (15) and housed within a support member (25) on said first section which element maintains a desired relative orientation between the other member (10) and said first section (15).

2.     A device according to claim 1, characterised in that the element (26) is tubular and coaxial with said first section (15).

3.     A device according to claim 1 or 2, characterised in that the support member (25) is tubular and is mounted at one end on the first section (15), retainer means (29) being provided on the support member (25) to retain the element (26) axially therein.

4.   A device according to Claim 3 characterised in that the retainer means is a bent-over lip (29) at the opposite end of the support member (25).

5.   A device according to Claim 3 or 4 characterised in that a bearing (28) is positioned between the retainer means (29) and an adjacent end of the element (26) and which engages the said other member (10) of the driving and driven members (10, 16).

6.   A device according to any preceding claim characterised in that the element (26) and the first section (15) are formed with co-operable interlock means (24, 27) whereby the first section and element are rotationally fast with each other.

7.   A device according to Claim 6 characterised in that the interlock means comprises a tapered recess (24) on one (15) of the first section and element and a tapered projection (27) on the other (26) of the first section and element.

8.   A device according to any preceeding claim characterised in that the first section (15) and the element (26) are formed with aligned axial splines (14, 34) which are slidably engageable with a spline (13) on said other member (10).

9.  A device according to any preceeding claim characterised in that the first section (15) is formed from metal and the element (26) is formed from *metal or* plastics material.

10.  A device for transmitting torque comprising a driving member (10) and a driven member (16) which are movable relatively in an axial sense, ane of said members including first and second sections (15, 21) the first (15) of which receives a portion (13) of the other member (10) in one axial position to enable torque to be transmitted and the second (21) of which receives said portion (13) of the other member in a different axial position,

characterised in that the driven member (16) is formed integrally with a member (17) through which torque is transmitted to a rotary component (20).

11.  A device according to Claim 10 characterised in that the rotary component (20) is a component of a universal joint (18).

12.    A device for transmitting torque comprising a driving member (10) and a driven member (16) which are movable relatively in an axial sense, one of said members (16) being tubular and including first and second sections (15,40) the first (15) of which receives a portion (13) of the other member (10) in one axial position to enable torque to be transmitted and the second (40) of which receives said portion 13 of the other member in a different axial position characterised in that the second section (40) is cast, moulded or similarly formed on the first section.

13.    A method of forming a spline in a member of a device according to any preceding claim characterised by passing a spline -forming tool (60) along a preformed spline (14) in one of said first and second sections (15) and subsequently moving the tool through an unsplined section        of the other(a')of said first and second sections thereby forming a spline (34) in said other section in alignment with said pre-formed spline.

14.    A method according to claim 13, characterised by mounting the second section (21) on the first    section (15) prior to moving the tool through the first and second sections (15, 21) and subsequently locating the other member (10) in the first and second sections.

15.    A method according to claim 13 or 14 and in the case where said element is provided characterised by locating the element (26) adjacent the first section (15), positioning the support member (25) over the element (26) and securing the support member to the first section, moving the tool (60) to form the spline (34) locating the other member (10) within the first and second sections and providing retainer means (29) to retain the element within the support member.

FIG.1

0161069

FIG. 2

FIG. 3

FIG. 4

FIG. 5

FIG. 6

FIG. 8

4 / 4

FIG.7

FIG.9

FIG.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 277 969 (LEE-MASON TOOLS LTD.) <br> * Page 11, paragraphs 1,2; figure 1 * | 1-3,6, 8,9 | F 16 C 3/03 <br> F 16 D 3/06 <br> B 62 D 1/18 |
| A | DE-A-2 952 029 (HÄGELE G.) <br> * Whole document * | 10-12 | |
| A | CH-A- 381 996 (J.A.ADLOFF) | | |
| A | FR-A-2 441 760 (J. SCHULTENKÄMPER) | | |
| A | FR-A-1 451 896 (L.T. SHAW) | | TECHNICAL FIELDS SEARCHED (Int. Cl.4) |
| A | FR-A-2 455 204 (VOITH TRANSMIT GmbH) | | F 16 C <br> F 16 D <br> B 62 D |

The present search report has been drawn up for all claims

| Place of search | Date of completion of the search | Examiner |
|---|---|---|
| THE HAGUE | 04-07-1985 | BEGUIN C.P. |